(19) **Europäisches Patentamt**
**European Patent Office**
**Office européen des brevets**

(11) **EP 4 030 363 A1**

(12) **EUROPEAN PATENT APPLICATION**

(43) Date of publication:
**20.07.2022 Bulletin 2022/29**

(21) Application number: **21211644.6**

(22) Date of filing: **01.12.2021**

(51) International Patent Classification (IPC):
**G06Q 10/04** *(2012.01)*

(52) Cooperative Patent Classification (CPC):
**G06Q 10/04**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.01.2021 US 202117248198**

(71) Applicant: **FUJITSU LIMITED**
**Kawasaki-shi, Kanagawa 211-8588 (JP)**

(72) Inventors:
• **Mandal, Avradip**
  **Sunnyvale, CA, 94085 (US)**
• **Roy, Arnab**
  **Sunnyvale, CA, 94085 (US)**
• **Upadhyay, Sarvagya**
  **Sunnyvale, CA, 94085 (US)**
• **Ushijima-Mwesigwa,, Hayato**
  **Sunnyvale, CA, 94085 (US)**

(74) Representative: **Hoffmann Eitle**
**Patent- und Rechtsanwälte PartmbB**
**Arabellastraße 30**
**81925 München (DE)**

(54) **USING LATTICE REDUCTION AND OPTIMIZATION SOLVERS FOR SOLVING MULTI-DIMENSIONAL KNAPSACK PROBLEMS AND VARIANTS THEREOF**

(57)     According to an aspect of an embodiment, operations include obtaining a first set of input parameters associated with a modified multi-dimensional knapsack problem. The operations further include determining a lattice representation of the modified multi-dimensional knapsack problem and computing a reduced basis by applying a lattice reduction method on the set of basis vectors of the determined lattice representation. The operations further include determining a first mathematical formulation of the modified multi-dimensional knapsack problem based on the reduced basis and submitting the determined first mathematical formulation as an input to an integer linear programming (ILP) solver. The operations further include receiving a first solution of the submitted mathematical formulation from the ILP solver and determining an integral solution of the modified multi-dimensional knapsack problem. The operations further include controlling a user device to output the determined integral solution.

FIG. 2

**EP 4 030 363 A1**

**Description**

FIELD

The embodiments discussed in the present disclosure are related to solving multi-dimensional knapsack problems and variants thereof using lattice reduction and optimization solvers.

BACKGROUND

Many of the real-world problems can be treated as an integer programming (IP) problem. Many real-world problems in various industries, such as scheduling, resource allocation, and routing involve decisions as discrete choices which fall into the scope of an IP problem. For example, a real-world problem of a project return maximization may be considered as an IP problem, in which it may be required to maximize the revenue generated by a project that is subjected to one or more budget constraints. Any particular IP problem will usually have a specific set of optimal solutions which may have to be searched from a discrete solution space.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

SUMMARY

According to an aspect of the disclosure, operations may include obtaining a first set of input parameters associated with a modified multi-dimensional knapsack problem and determining a lattice representation of the modified multi-dimensional knapsack problem based on the obtained first set of input parameters. The determined lattice representation may include a set of basis vectors. The operations may further include computing a reduced basis by applying a lattice reduction method on the set of basis vectors of the determined lattice representation. The operations may further include determining a first mathematical formulation of the modified multi-dimensional knapsack problem based on the reduced basis. The determined first mathematical formulation may include an objective function and a constraint function applicable on the objective function. The operations may further include submitting the determined first mathematical formulation as an input to an integer linear programming (ILP) solver. The operations may further include receiving a first solution of the submitted mathematical formulation from the ILP solver and determining an integral solution of the modified multi-dimensional knapsack problem based on the received solution. The operations may further include and controlling a user device to output the determined integral solution.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

BRIEF DESCRIPTION OF THE DRAWINGS

Example embodiments will be described and explained with additional specificity and detail through the use of the accompanying drawings in which:

FIG. 1 is a diagram representing an exemplary network environment for using lattice reduction and optimization solvers for solving multi-dimensional knapsack problems and variants thereof,
FIG. 2 is a block diagram of a system for using lattice reduction and optimization solvers for solving multi-dimensional knapsack problems and variants thereof,
FIG. 3 depicts a block diagram that illustrates a set of operations for using lattice reduction and optimization solvers for solving multi-dimensional knapsack problems and variants thereof,
FIG. 4 is a flowchart for transformation of a multi-dimensional knapsack problem to a modified multi-dimensional knapsack problem,
FIG. 5 is a flowchart of an example method for solving a cutting stock problem using lattice reduction methods and integer linear programming solvers,
all according to at least one embodiment described in the present disclosure.

DESCRIPTION OF EMBODIMENTS

Embodiments of the present disclosure are explained with reference to the accompanying drawings.

Some embodiments described in the present disclosure relate to using lattice reduction and optimization solvers for solving multi-dimensional knapsack problems and variants thereof. Many of the real-world problems can be treated as an integer programming (IP) problem (e.g. the knapsack problem or the multi-dimensional problem). Many real-world problems in various industries (such as airline industry, manufacturing process optimization, supply chain, routing, and finance) involve decisions as discrete choices which may fall into the scope of an IP problem. For example, a real-world problem of a project return maximization may be considered as an IP problem, in which it may be required to maximize the revenue generated by the project that is subjected to one or more constraints. Any particular IP problem will usually have a specific set of optimal solutions, which may have to be searched from a discrete solution space.

Many of the real-world optimization problems may be modelled as a knapsack problem or a variant thereof. A variant of the knapsack problem may be a multi-dimensional knapsack problem in which the weight of knapsack item is given by a n-dimensional vector and the knapsack has a n-dimensional capacity vector. The target in the multi-dimensional knapsack problem may be to maximize the sum of the values of the items in the knapsack such that the sum of weights of items in each dimension does not exceed its corresponding capacity provided in the n-dimensional capacity vector.

The knapsack problem or its variants (such as the multi-dimensional knapsack problem) are typically considered as an IP problem and have applications to many problems, especially in business and computer science. For example, an internet download manager may use knapsack(s) to download data by dividing the data into chunks and packing such the chunks to utilize a maximum limit size. Similarly, a load-shedding problem in a decentralized grid system may be casted as a knapsack problem (0-1 knapsack problem). Also, application of the knapsack problem has been found in cryptanalysis and cryptosystems, real-world decision making processes, such as selection of portfolios, resource allocation problems, selection of assets for asset based securitization, finding a least expensive way of cutting raw materials, and problems related to image processing.

A variant of the multi-dimensional knapsack (MDK) problem includes a penalty term. Such variation may be referred to as a modified multi-dimensional knapsack or multi-dimensional penalty knapsack (MDPK). For example, the MDK problem may be modelled on a real-world problem of filling a box of fixed dimension with most valuable items. The MDPK version of the MDK problem may introduce a penalty applicable if an empty space is left while filling the box.

Traditionally, an IP problem, like a knapsack or MDK may be directly solved on Integer Linear Programming (ILP) solvers or may be solved using Quadratic Unconstrained Binary Optimization (QUBO) solvers. However, in many cases, solutions obtained using ILP solvers may fail to prove optimality, even if the solvers can find the optimal solutions. Similarly, QUBO solvers do not show good performance for knapsack type problems. Therefore, there may be requited a method that can generate the optimal or near-optimal solution of an IP problem, like MDK or MDPK, along with a proof of optimality in a tractable amount of time.

According to one or more embodiments of the present disclosure, the technological field of discrete optimization may be improved by configuring a system in a manner in which the system is able to determine a proof of optimality and a solution to IP problems, such as MDPK or MDK in a tractable amount of time. The IP problem, such as MDPK, may be transformed into a simplified form of an ILP problem using one or more lattice reduction techniques. The simplified form of the problem may be solved using traditional ILP solver(s) to obtain an optimal integral solution of the IP problem along with the proof of optimality in a tractable amount of time.

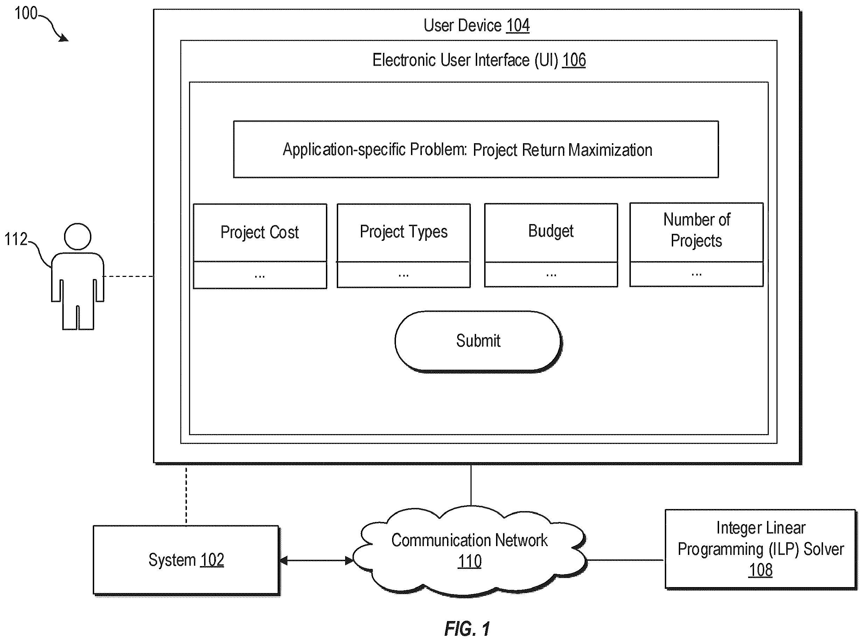

FIG. 1 is a diagram representing an exemplary network environment for using lattice reduction and optimization solvers for solving multi-dimensional knapsack problems and variants thereof, arranged in accordance with at least one embodiment described in the present disclosure. With reference to FIG. 1, there is shown a network environment 100. The network environment 100 includes a system 102, a user device 104, an electronic User Interface (UI) 106 of the user device 104, and an integer linear programming (ILP) solver 108. The system 102, the user device 104, and the ILP solver 108 may be communicatively coupled to each other, via a communication network 110. There is further shown a user 112 who may be associated with the user device 104.

The system 102 may be a part of an on-premise computing environment associated with the user 112 or a cloud-based computing environment. The system 102 may include suitable logic, circuitry, and interfaces that may be configured to display a set of user-selectable options onto the electronic UI 106 of the user device 104. Each of such options may enable a user (such as the user 112) to configure a real-world optimization problem as an integer programming (IP) problem, such as a multi-dimensional knapsack problem or a variant thereof. For example, one of the variations of the multi-dimensional knapsack problem may introduce an additional penalty parameter. Such a variation may be referred to as a modified multi-dimensional knapsack problem or a multi-dimensional penalty knapsack problem.

The multi-dimensional knapsack problem may model multiple real-world problems and may be mathematically formulated to include an objective function and a set of constraints associated with the objective function. By way of example, and not limitation, the objective function of the multi-dimensional knapsack problem may be given by equation (1), as follows:

$$\text{maximize: } \sum_{j=1}^{n} v_j x_j \qquad\qquad (1)$$

where,

> $v_j$ represents a value of item 'j',
> n represents a total number of items, and
> $x_j$ represents a number of copies of item 'j'.

The objective function of equation (1) may be subjected to an inequality constraint (i.e. a constraint function), which may be given by equation (2), as follows:

$$\sum_{j=1}^{n} w_{ij} x_j \le b_i, \forall\ 1 \le i \le m \qquad\qquad (2)$$

$x_j \in N^n, \forall\ 1 \le j \le n$
Where,

> m represents number of resources with weight $b_i > 0$
> $w_{ij}$ represents a weight of item 'j' from each resource 'i', and
> $b_i$ represents a maximum capacity of a knapsack in 'i' dimension.

The modified multi-dimensional knapsack problem may introduce a penalty vector in the objective function, as provided by equation (1), of the multi-dimensional knapsack problem. Many real-world problems, such as but not limited to, a cutting stock problem or a project return maximization problem can be formulated as the modified multi-dimensional knapsack problem. The objective function of the modified multi-dimensional knapsack problem may be given by equation (3), as follows:

$$\text{Minimize}(x): c^T x + \lambda^T (b - Ax) \qquad\qquad (3)$$

where,

> c represents a cost vector and $c \in R_+^n$,
>
> b may be a vector that represents a set target and $b \in N_+^m$,

A may be a constraint matrix and represents resources required to fulfil an unknown integral quantity (x) of each offering type of a set of offering types and $A \in N_+^{m \times n}$, and $\lambda$ represents the penalty vector and $\lambda \in R_+^m$.
The objective function of equation (3) may be subjected to a constraint function, which is given by equation (4), as follows:

$$Ax \le b \qquad\qquad (4)$$

By way of example, and not limitation, a production problem may be formulated as the modified multi-dimensional knapsack problem. With reference to equation (3) and (4), the indices of vectors $x \in N_+^n$ and $c \in R_+^n$ may represent a type of produce and the vectors $x \in N_+^n$ and $c \in R_+^n$ may represent the number of each produce and associated cost of each produce, respectively. The matrix $A \in R_+^{m \times n}$ may represent 'm' machines that may be produce a certain number of each produce. The vector (Ax - b) may imply that each machine should not overproduce above 'b'. The overproduction, if any, may be captured in the objective function by $\lambda^T(b-Ax)$, where $\lambda \in R_+^m$ may represent the penalty vector for overproduction of the items above 'b'.

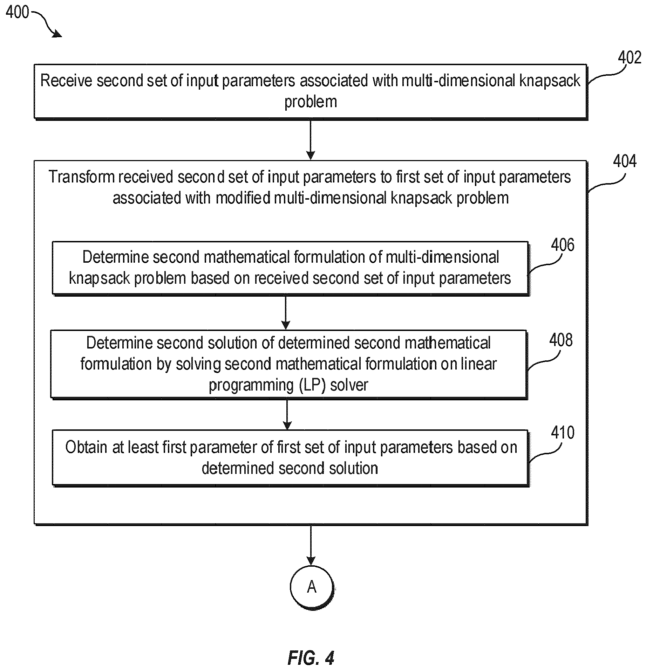

While the modified multi-dimensional knapsack problem is a minimization problem (as given by equation (3)), the multi-dimensional knapsack problem is a maximization problem (as given by equation (1)). In order to solve the multi-dimensional knapsack problem, the multi-dimensional knapsack problem may have to be modelled as the modified multi-dimensional knapsack problem. Details associated with the modelling of the multi-dimensional knapsack problem as the modified multi-dimensional knapsack problem are provided in FIG. 4, for example.

In one or more embodiments, the system 102 may include the user device 104 as part of the on-premise computing environment. The user device 104 may include a suitable network interface to communicate with the ILP solver 108. Examples of the user device 104 may include, but are not limited to, a mobile device, a desktop computer, a laptop, a computer workstation, or a server, such as a cloud server.

The electronic UI 106 may be displayed on the user device 104 to allow the user 112 to input a first set of input parameters to the system 102. The first set of input parameters may be associated with the modified multi-dimensional knapsack problem. In an embodiment, the electronic UI 106 may be displayed on the user device 104 to allow the user 112 to input a second set of input parameters to the system 102. The second set of input parameters may be associated with the multi-dimensional knapsack problem. Details about the second set of input parameters are provided in FIG. 4, for example.

In some instances, instead of providing the first set of input parameters, the user 112 may input parameters associated with an application-specific problem (i.e. a real-world optimization problem). For example, for a project return maximization problem, the electronic UI 106 may include options through which the user 112 may specify parameters, such as a number of projects available for completion in a year, a budget for projects, a cost per project type, and different types of projects available. The system 102 may map such parameters to a first set of input parameters associated with a multi-dimensional knapsack problem or to a second set of input parameters associated with a modified multi-dimensional problem.

The system 102 may obtain the first set of input parameters, for example, via the electronic UI 106 of the user device 104. The first set of input parameters may include, for example, a first parameter, a second parameter, a third parameter, and a fourth parameter. With reference to equation (3), the first parameter (c) may represent the cost vector that may include a cost of each offering type of a set of offering types. For example, the offering type may correspond to a produce in production problem or a service, such as a project in case of a project return maximation problem. The second parameter (A) may represent resources that may be required to fulfil the unknown integral quantity (x) of each offering type of the set of offering types. The third parameter (b) may represent a set target that may be applicable on the fulfilment of an objective of the modified multi-dimensional knapsack problem and the fourth parameter (λ) may represent the penalty vector. The penalty vector may regularize the objective function of the modified multi-dimensional knapsack problem.

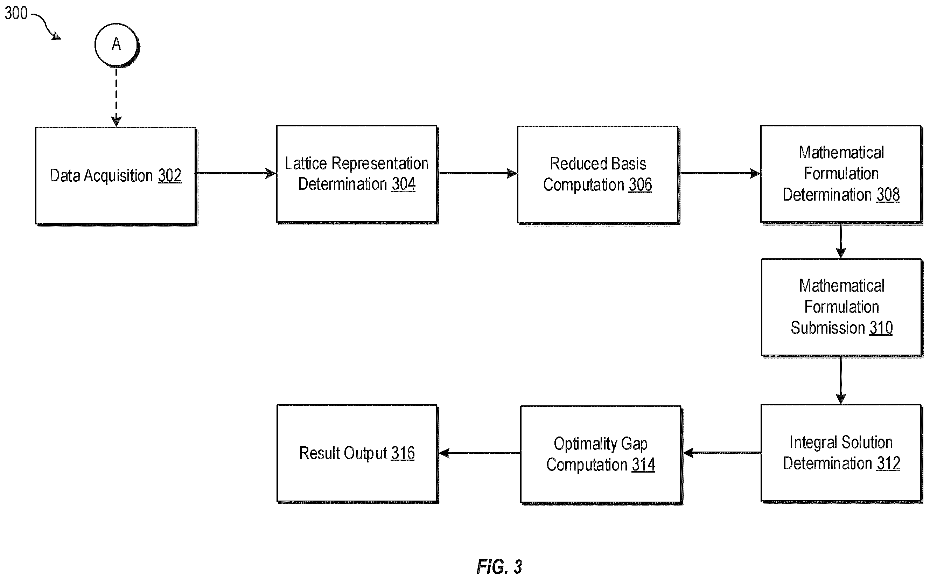

After obtaining the first set of input parameters, the system 102 may be configured to determine a lattice representation of the modified multi-dimensional knapsack problem. The lattice representation may be determined based on the obtained first set of input parameters and may include a set of basis vectors. A lattice may be a partially ordered set in which every two elements have a unique supremum (also called a least upper bound or join) and a unique infimum (also called a greatest lower bound or meet). A basis vector may correspond to one vector of a basis, and the basis may be a family of linearly independent vectors which spans a given vector space. Details on the determination of the lattice representation are provided in FIG. 3, for example.

After determining the lattice representation, the system 102 may be configured to compute a reduced basis. The reduced basis may be computed by application of a lattice reduction method on the set of basis vectors of the determined lattice representation. Examples of the lattice reduction method may include, but are not limited to, Lenstra-Lenstra-Lovász (LLL) lattice basis reduction or a Blockwise Korkine-Zolotarev (BKZ) Algorithm. Basis vectors in the reduced basis may be shorter as compared to ones in the determined lattice representation and the basis vectors in the reduced basis may be nearly orthogonal.

The system 102 may determine a first mathematical formulation of the modified multi-dimensional knapsack problem based on the reduced basis. The first mathematical formulation may include an objective function associated with the modified multi-dimensional knapsack problem and a constraint function that may be applicable on the objective function. An example of the objective function and the constraint function is given by equation (3) and equation (4), respectively.

The system 102 may be configured to submit the determined first mathematical formulation as an input to the ILP solver 108. In an embodiment, such a submission may be performed via one or more application programming interface (API) calls to a computing system which hosts the ILP solver 108.

The ILP solver 108 may include suitable logic, circuitry, interfaces, and/or code that may be configured to solve the ILP problem. The ILP solver 108 may find an optimal or near-optimal solution of the ILP problem from a solution space of the corresponding ILP problem. The ILP solver 108 may implement one or more techniques to narrow down the solution space, find integer-feasible solutions, and discard portions of the solution space that do not contain better integer-feasible solutions. Examples of some of the techniques may include, but are not limited to, a cutting plane technique, heuristics, and a branch and bound technique. Such techniques and well known to one skilled in the art and therefore, details of such techniques are omitted from the disclosure for the sake of brevity.

In an embodiment, the ILP solver 108 may be a software application, storing program instructions executable on the system 102. In such a case, the system 102 may be a general-purpose computer which can execute the software application and associated libraries/dependencies to solve an ILP problem. Examples of a software based ILP solver may include, but are not limited to, CPLEX, GCG, GLPK/GLPSOL, Gurobi, Lp_solve, LOQO, or Mathematica. In another embodiment, the ILP solver 108 may be a specialized hardware device of the system 102 for storing and executing program instructions associated with solving ILP problems.

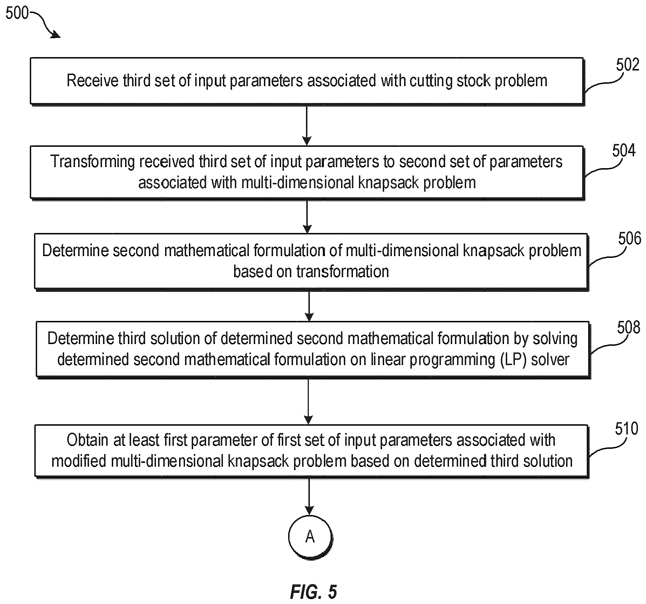

The ILP solver 108 may receive the first mathematical formulation and may compute a first solution of the submitted first mathematical formulation. The system 102 may receive a first solution of the submitted first mathematical formulation from the ILP solver 108 and may determine an integral solution of the modified multi-dimensional knapsack problem based on the received first solution. Details about the first solution and the determination of the integral solution are provided in FIG. 3 and FIG. 5, for example.

The system 102 may be further configured to control the user device 104 to output the determined integral solution. For example, the determined integral solution may be displayed on the electronic UI 106 of the user device 104.

It should be noted that the communication among the system 102, the user device 104, and the ILP solver 108 may be performed via the communication network 110. The communication network 110 may include a communication medium through which the system 102 may communicate with the ILP solver 108, and different servers (not shown). Examples of the communication network 110 may include, but are not limited to, the Internet, a cloud network, a Wireless Fidelity (Wi-Fi) network, a Personal Area Network (PAN), a Local Area Network (LAN), and/or a Metropolitan Area Network (MAN).

Various devices in the network environment 100 may be configured to connect to the communication network 110, in accordance with various wired and wireless communication protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), ZigBee, EDGE, IEEE 802.11, light fidelity(Li-Fi), 802.16, IEEE 802.11s, IEEE 802.11g, multi-hop communication, wireless access point (AP), device to device communication, cellular communication protocols, and/or Bluetooth (BT) communication protocols, or a combination thereof.

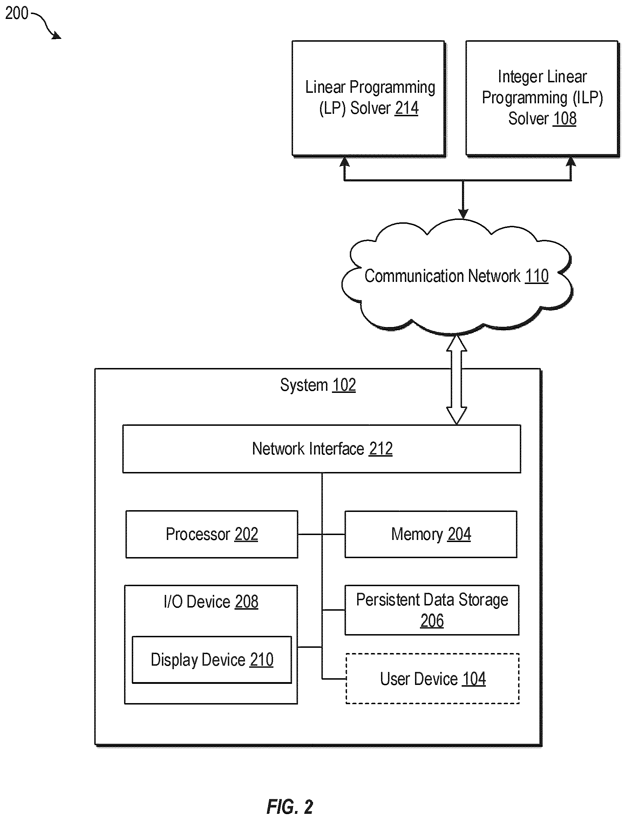

FIG. 2 is a block diagram of a system for using lattice reduction and optimization solvers for solving multi-dimensional knapsack problems and variants thereof, according to at least one embodiment of the disclosure. FIG. 2 is explained in conjunction with elements from FIG. 1. With reference to FIG. 2, there is shown a block diagram 200 of the system 102. The system 102 may include a processor 202, a memory 204, and a persistent data storage 206. In some embodiments, the system 102 may also include an input/output (I/O) device 208 that may include a display device 210, and a network interface 212. The user device 104 may or may not be a part of the system 102. There is further shown the ILP solver 108 and a Linear Programming (LP) solver 214 that may be coupled with the system 102.

The processor 202 may include suitable logic, circuitry, and/or interfaces that may be configured to execute program instructions associated with different operations to be executed by the system 102. The processor 202 may include any suitable special-purpose or general-purpose computer, computing entity, or processing device including various computer hardware or software modules and may be configured to execute instructions stored on any applicable computer-readable storage media. For example, the processor 202 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 2, the processor 202 may include any number of processors configured to, individually or collectively, perform or direct performance of any number of operations of the system 102, as described in the present disclosure.

In some embodiments, the processor 202 may be configured to interpret and/or execute program instructions and/or process data stored in the memory 204 and/or the persistent data storage 206. In some embodiments, the processor 202 may fetch program instructions from the persistent data storage 206 and load the program instructions in the memory 204. After the program instructions are loaded into memory 204, the processor 202 may execute the program instructions. Some of the examples of the processor 202 may be a GPU, a CPU, a RISC processor, an ASIC processor, a CISC processor, a co-processor, and/or a combination thereof.

The memory 204 may include suitable logic, circuitry, and/or interfaces that may be configured to store program instructions executable by the processor 202. In certain embodiments, the memory 204 may be configured to store information, such as the obtained first set of input parameters and the received second set of input parameters. The memory 204 may include computer-readable storage media for carrying or having computer-executable instructions or data structures stored thereon. Such computer-readable storage media may include any available media that may be accessed by a general-purpose or special-purpose computer, such as the processor 202.

By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 202 to perform a certain operation or group of operations associated with the system 102.

The persistent data storage 206 may include suitable logic, circuitry, and/or interfaces that may be configured to store program instructions executable by the processor 202, operating systems, and/or application-specific information, such as logs and application-specific databases. In certain embodiments, the memory 204 may be configured to store information and instructions related to transformation of the received second set of input parameters into the first set of input parameters. The persistent data storage 206 may include computer-readable storage media for carrying or having computer-executable instructions or data structures stored thereon. Such computer-readable storage media may include any available media that may be accessed by a general-purpose or special-purpose computer, such as the processor 202.

By way of example, and not limitation, such computer-readable storage media may include tangible or non-transitory computer-readable storage media including Compact Disc Read-Only Memory (CD-ROM) or other optical disk storage, magnetic disk storage or other magnetic storage devices (e.g., Hard-Disk Drive (HDD)), flash memory devices (e.g., Solid State Drive (SSD), Secure Digital (SD) card, other solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 202 to perform a certain operation or group of operations associated with the system 102.

The I/O device 208 may include suitable logic, circuitry, interfaces, and/or code that may be configured to receive the second set of input parameters. The I/O device 208 may be further configured to display the integral solution of the modified multi-dimensional knapsack problem on the display device 210. The I/O device 208 may include various input and output devices, which may be configured to communicate with the processor 202 and other components, such as the network interface 212. Examples of the input devices may include, but are not limited to, a touch screen, a keyboard, a mouse, a joystick, and/or a microphone. Examples of the output devices may include, but are not limited to, a display (such as the display device 210) and a speaker.

The display device 210 may include suitable logic, circuitry, interfaces, and/or code that may be configured to render the electronic UI 106 onto a display screen of the display device 210. In one or more embodiments, multiple user inputs from a user (such as the user 112) may be received directly, via the display device 210. In such cases, the display screen of the display device 210 may be a touch screen to receive the multiple user inputs. The display device 210 may be realized through several known technologies such as, but not limited to, a Liquid Crystal Display (LCD) display, a Light Emitting Diode (LED) display, a plasma display, and/or an Organic LED (OLED) display technology, and/or other display technologies. Additionally, in some embodiments, the display device 210 may refer to a display screen of smart-glass device, a 3D display, a see-through display, a projection-based display, an electro-chromic display, and/or a transparent display.

The Linear Programming (LP) solver 214 may include suitable logic, circuitry, interfaces, and/or code that may be configured to solve linear optimization problems in polynomial time. In some embodiments, the LP solver 214 may correspond to a software that may be installed on the system 102 or hosted on a cloud environment. In some other embodiments, the LP solver 214 may be a specialized hardware that may be configured solve the linear optimization problems. Several open source and proprietary LP solvers as well as libraries are known in the art. Examples of such LP solvers may include but is not limited to APOPT, BCP, CLP CBC, CPLEX, GCG, GLPK/GLPSOL, Gurobi, LINDO, Lp_solve, LOQO, and Mathematica.

The network interface 212 may include suitable logic, circuitry, interfaces, and/or code that may be configured to establish a communication between the system 102, the user device 104, the ILP solver 108, and the LP solver 214, via the communication network 110. The network interface 212 may be implemented by use of various known technologies to support wired or wireless communication of the system 102 via the communication network 110. The network interface 212 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, and/or a local buffer.

The network interface 212 may communicate via wireless communication with networks, such as the Internet, an Intranet, and/or a wireless network, such as a cellular telephone network, a wireless local area network (LAN) and/or a metropolitan area network (MAN). The wireless communication may use any of a plurality of communication standards, protocols and technologies, such as Global System for Mobile Communications (GSM), Enhanced Data GSM Environment (EDGE), wideband code division multiple access (W-CDMA), Long Term Evolution (LTE), code division multiple access (CDMA), time division multiple access (TDMA), Bluetooth, Wireless Fidelity (Wi-Fi) (such as IEEE 802.11a, IEEE 802.11b, IEEE 802.11g and/or IEEE 802.11n), voice over Internet Protocol (VoIP), light fidelity (Li-Fi), or Wi-MAX.

Modifications, additions, or omissions may be made to the system 102 without departing from the scope of the present disclosure. For example, in some embodiments, the system 102 may include any number of other components that may not be explicitly illustrated or described.

FIG. 3 depicts a block diagram that illustrates a set of operations for using lattice reduction and optimization solvers for solving multi-dimensional knapsack problems or variants thereof, in accordance with example embodiments. FIG. 3 is explained in conjunction with elements from FIG. 1 and FIG. 2. With reference to FIG. 3, there is shown a set of exemplary operations 300. The exemplary operations illustrated in the block diagram may be performed by the system 102 of FIG. 1 or by the processor 202 of FIG. 2.

At 302, a data acquisition may be performed. For data acquisition, the system 102 may obtain a first set of input parameters that may be associated with the modified multi-dimensional knapsack problem. The first set of input parameters may include the first parameter that may represent a cost vector (c). The cost vector (c) may include the cost of each offering type of the set of offering types. The first set of input parameters may further include the second parameter that may represent resources (e.g., A) required to fulfil the unknown integral quantity (x) of each offering type of the set of offering types. The first set of input parameters may further include the third parameter that may represent the set target (b) applicable on the fulfilment of the objective of the modified multi-dimensional knapsack problem, and the fourth parameter that may represent a penalty vector ($\lambda$).

In some embodiments, the system 102 may receive the second set of input parameters associated with the multi-dimensional knapsack problem as an input. In such a case, the received second set of input parameters may be transformed to the first set of input parameters. Details about the transformation of the second set of input parameters to the first set of input parameters are provided in FIG. 4. After the transformation, the multi-dimensional knapsack problem may be solved as a modified multi-dimensional knapsack problem, as described, for example, in FIG. 4.

At 304, a lattice representation of the modified multi-dimensional knapsack problem may be determined. The lattice representation may be determined based on the first set of input parameters. The determined lattice representation may include a set of basis vectors. For a lattice, the basis may be a family of linearly independent vectors that may span a given vector space. The lattice may be defined by an integer linear combination of a basis vector set {$b_i$, $b_2$, $b_3$, $b_4$, ......$b_n$}. By way of example, and not limitation, the lattice representation of the modified multi-dimensional knapsack problem may be provided by equation (5), as follows:

$$\begin{bmatrix} -\text{Diag}(\lambda)A & \text{Diag}(\lambda)b \\ \text{Diag}(c) & 0^{n \times 1} \end{bmatrix} \qquad (5)$$

where,

Diag(A) may represent a square matrix with diagonal entries from $\lambda$ (i.e. the vector) and rest of the entries as 0, and Diag(c) may represent a square matrix with diagonal entries from c (i.e. the cost vector) and rest of the entries as 0.

At 306, a reduced basis may be computed. The system 102 may be configured to compute the reduced basis of the determined lattice representation (given by equation (5)). The reduced basis may be computed by application of a lattice reduction method on the set of basis vectors of the determined lattice representation. The lattice reduction method may be, for example, the Lenstra-Lenstra-Lovasz (LLL) lattice basis reduction, the Block Korkine Zolotarev (BKZ) method, or Seysen's lattice reduction method.

The reduced basis may be short in length as compared to the basis vectors in the determined lattice representation. Moreover, the reduced basis may be nearly orthogonal. By way of example, and not limitation, the computed reduced basis may be provided by equation (6), as follows:

$$B \in R^{(m+n)X(n+1)} \qquad (6)$$

where,

B may represent the computed reduced basis, and
$R^{(m+n)\times(n+1)}$ may represent a real coordinate space of dimension $(m+n) \times (n+1)$.

At 308, a first mathematical formulation may be determined. The system 102 may be configured to determine the first mathematical formulation of the modified multi-dimensional knapsack problem. The first mathematical formulation may be determined based on the computed reduced basis. The first mathematical formulation may include an objective function and one or more constraint functions that may be applicable on the objective function. By way of example, and not limitation, the objective function in the first mathematical formulation may be provided by equation (7), as follows:

$$\min (1^{(m+n)}B)y \qquad\qquad (7)$$

where,

B may represent the computed reduced basis, and
y may represent a first variable whose value is to be found and $y \in Z^{(n+1)\times 1}$.

The objective function of equation (7) may be subjected to a constraint function, which may be given by equation (8), as follows:

$$(By)^{T} \in R_{+}^{(m+n)} \qquad\qquad (8)$$

At 310, a submission operation may be performed. In the submission operation, the system 102 may be configured to submit the determined first mathematical formulation as an input to the ILP solver 108. In some embodiments, the determined first mathematical formulation may be submitted via an API call to the ILP solver 108, hosted on a computing server. The ILP solver 108 may solve the first mathematical formulation to generate a first solution of the submitted first mathematical formulation.

The system 102 may be configured to receive the first solution of the submitted first mathematical formulation from the ILP solver 108. The received first solution may include a vector of values for the first variable (y). The penalty vector ($\lambda$) may regularize the objective function of equation (7) based on whether the first solution of the submitted first mathematical formulation violates the set target (b) represented by the third parameter. For example, in a production problem where the objective function is to minimize a production cost for a given cost per order type and an order pattern (A), the penalty vector may regularize the objective function if the integral solution determines a production plan which exceeds a set production target (b). In other words, the penalty vector may capture overproduction in the objective function. As an example, from equation (3) of FIG. 1, the addition of a term $\lambda^{T}(b - Ax)$ to a term $c^{T}x$ may be used to regularize the objective function if there is overproduction.

At 312, an integral solution may be determined. The system 102 may be configured to determine an integral solution of the modified multi-dimensional knapsack problem based on the received first solution. To determine the integral solution, the system 102 may compute a product of the reduced basis (B) and the received first solution (y) of the submitted first mathematical formulation. The system 102 may determine a set of integral co-ordinate values of the computed product (By). For example, the set of integral coordinates may be selected as last 'n' coordinates of the computed product (By).

The integral solution may be determined based on the determined set of integral co-ordinate values and the first parameter (i.e. represented by a cost vector c). By way of example, and not limitation, the integral solution of the modified multi-dimensional knapsack problem may be provided by equation (9), as follows:

$$x = \left(\frac{z_1}{c_1}, \frac{z_2}{c_2}, ....\frac{z_n}{c_n}\right) \in Z_{+}^{n} \qquad\qquad (9)$$

where,

$z_1, z_2, ....$ and $z_n$ may represent the last 'n' co-ordinates of the product (By), and
$c = (c_1, c_2, ......., c_n)^{T}$ may represent the cost vector.

It should be noted that the integral solution of the modified multi-dimensional knapsack problem may also be a solution of the multi-dimensional knapsack problem in case a second set of the input parameters (as described in FIG.

4) are received.

At 314, an optimality gap may be computed. The system 102 may be configured to compute the optimality gap based on the integral solution. The optimal gap may be measured by a difference between best lower and upper bounds of the integral solution. The optimality gap may lie between 0 and 1 (inclusive of both 0 and 1) and may be considered as a proof of optimality of the integral solution. If the value of the optimality gap for the integral solution is close to 0, then the integral solution may be more optimal than if the optimality gap is closer to 1.

At 316, a result may be output on the user device 104. For the result, the system 102 may be configured to control the user device 104 to output the determined integral solution and/or the computed optimality gap on the electronic UI 106 of the user device 104.

In some embodiments, a project return maximization problem may be formulated as the modified multi-dimensional knapsack problem. The project return maximization problem may be subjected to one or more budget constraints and the objective of the project return maximization problem may be to maximize the revenue generated by all the projects in an organization in a particular period, such as a financial year. By way of example, and not limitation, an objective function of the project return maximization problem may be formulated as the modified multi-dimensional knapsack problem and may be given by equation (10), as follows:

$$\text{maximize: } \sum_{p \in P} \sum_{y \in Y} (v_{py} - c_{py})x_{py} \qquad (10)$$

where,

$v_{py}$ represents a revenue generated by a project 'p' in a year 'y',
$c_{py}$ represents a cost incurred by the project 'p' in the year 'y',
P represents a set of projects, and
Y represents a set of years in which the set of projects 'P' will span.

The objective function of equation (10) may be subjected to one or more budget constraints, which may be given by equation (11), as follows:

$$\sum_{p \in P} \sum_{t \leq y} c_{py}x_{py} \leq b_y, \forall y \in Y$$

$$\sum_{y=1}^{t} x_{py} \leq 1, \forall p \in P \qquad (11)$$

$$x_{py} \in N, \forall p \in P, y \in Y$$

Where,
$b_y$ represents a budget of the year 'y'.

Operations from 302 to 314 may be executed by the system 102 to determine the integral solution of the modified multi-dimensional knapsack problem. The integral solution of the modified multi-dimensional knapsack problem may also be a solution of the project return maximization problem. The system 102 may control the user device 104 to display the determined integral solution as the solution of the project return maximization problem on the electronic UI 106 of the user device 104.

Control may pass to end. Although the block diagram of FIG. 3 is illustrated as discrete operations, such as 302, 304, 306, 308, 310, 314, and 316; however, in certain embodiments, such discrete operations may be further divided into additional operations, combined into fewer operations, or eliminated, depending on the particular implementation.

FIG. 4 is a flowchart for transformation of a multi-dimensional knapsack problem to a modified multi-dimensional knapsack problem, arranged in accordance with at least one embodiment described in the present disclosure. FIG. 4 is explained in conjunction with elements from FIG. 1 and FIG. 2. With reference to FIG. 4, there is shown a flowchart 400. The first method illustrated in the flowchart 400 may start at 402 and may be performed by any suitable system, apparatus, or device, such as by the system 102 of FIG. 2.

At 402, a second set of input parameters may be received. The second set of input parameters may be associated with the multi-dimensional knapsack problem. The objective function of the multi-dimensional knapsack problem may be provided by equation (1) and the constraint function applicable on the objective function of the multi-dimensional knapsack problem may be provided by equation (2). The received second set of input parameters may include, for example, a value (v) of each item, a weight (w) of each item, and a maximum capacity (b) of the knapsack in each dimension.

At 404, the received second set of input parameters may be transformed to the first set of input parameters. The first set of input parameters may be associated with the modified multi-dimensional knapsack problem. The objective function of the modified multi-dimensional knapsack problem may be provided by equation (3) and the constraint function applicable on the objective function of the multi-dimensional knapsack problem may be provided by equation (4). The transformation may model the multi-dimensional knapsack problem as the modified multi-dimensional knapsack problem. The transformation of the multi-dimensional knapsack problem to the modified multi-dimensional knapsack problem may include operations described from 406 to 410, as described herein.

At 406, a second mathematical formulation of the multi-dimensional knapsack problem may be determined. The second mathematical formulation of the multi-dimensional knapsack problem may be determined based on the received second set of input parameters. By way of example, and not limitation, the determined second mathematical formulation may be given by equation (12), as follows:

$$\min \|\lambda^{T}\|_{L1} \qquad (12)$$

where,

$\lambda$ represents the penalty vector and $\lambda \in R_{+}^{m}$.

The determined second mathematical formulation may be subjected to a constraint function that may be provided by equation (13), as follows:

$$c^{T} = \lambda^{T}A - v^{T} \qquad (13)$$

where,

$\lambda$ represents the penalty vector and $\lambda \in R_{+}^{m}$,

A represents the constraint matrix and $A \in R_{+}^{mXn}$,

v represents the value of each item and $v \in R_{+}^{n}$, and

c represents the cost matrix and $c \in R_{+}^{n}$.

Using equation (2) of FIG. 1, constraint matrix (A) may be set as $A = w \in \mathbb{R}_{+}^{m \times n}$.

At 408, a second solution of the determined second mathematical formulation may be determined. The second solution may be determined by solving the second mathematical formulation on the LP solver 214. In some embodiments, the determined second mathematical formulation may be provided as an input to the LP solver 214. The LP solver 214 may be configured to solve the second mathematical formulation to generate the second solution and transmit the generated second solution to the system 102. The second solution ($\lambda^{T}$) may include a transpose of the penalty vector ($\lambda$) with a minimum L1 norm. The L1 norm may be defined as the summation of absolute values of components of the penalty vector ($\lambda$).

At 410, at least a first parameter of the first set of input parameters may be obtained. The first parameter may be obtained based on the determined second solution. In some embodiments, the first parameter may represent the penalty vector ($\lambda$), which may be obtained by applying a transpose operation on the second solution. The transpose operation may be applied to transpose (.$^{T}$) a transposed penalty vector ($\lambda^{T}$) to obtain the penalty vector ($\lambda$).Other parameters, such as the constraint matrix (A) may be obtained as $A = w \in \mathbb{R}_{+}^{m \times n}$ using equation (2) and the cost vector (c) may be obtained using equation (13).

After the first set of input parameters is obtained at 410, operations from 304 to 314 may be executed to obtain the integral solution of the modified multi-dimensional knapsack problem. The integral solution of the modified multi-dimensional knapsack problem may also be considered as an optimal or near-optimal solution of the multi-dimensional knapsack problem. The system 102 may control the user device 104 to output the determined integral solution of the multi-dimensional knapsack problem.

Control may pass to end. Although the flowchart 400 is illustrated as discrete operations, such as 402, 404, 406, 408, and 410; however, in certain embodiments, such discrete operations may be further divided into additional operations, combined into fewer operations, or eliminated, depending on the particular implementation.

FIG. 5 is a flowchart of an example method for solving a cutting stock problem using lattice reduction methods and integer linear programming solvers, arranged in accordance with at least one embodiment described in the present disclosure. FIG. 5 is explained in conjunction with elements from FIG. 1, FIG. 2, FIG. 3, and FIG. 4. With reference to FIG. 5, there is shown a flowchart 500. The example method illustrated in the flowchart 500 may start at 502 and may be performed by any suitable system, apparatus, or device, such as by the system 102 of FIG. 1 or the processor 202 of FIG. 2.

At 502, a third set of input parameters associated with a cutting stock problem may be received. The cutting stock problem may be an optimization problem of cutting standard-sized pieces (or patterns) of stock material, such as paper rolls or sheet metal, into pieces of specified sizes while minimizing material wasted and the cost associated with using the patterns. The cutting stock problem may be formulated as an integer linear programming problem. The third set of input parameters may include a parameter $(m)$ that may represent a number of orders, a parameter $(q_j)$ that may represent a number of pieces of the stock material in each order and $j = \{1,2,3,4,.........., m\}$, a parameter $(n)$ that may represent a list of all possible combinations of cuts (often called patterns), a parameter $(c_i)$ that may represent a cost associated with using the patterns. It should be noted that each pattern may be used multiple times.

An example of a mathematical formulation of the cutting stock problem as an ILP problem is provided herein. The objective function of the cutting stock problem may be given by equation (14), as follows:

$$\text{minimize: } \sum_{i=1}^{n} c_i x_i \qquad (14)$$

where,

$c_i$ represents a cost associated with each pattern 'i', and
$x_i$ represents a number of copies of pattern 'i'

The objective function of equation (14) may be subjected to the one or more constraint functions, which may be given by equation (15), as follows:

$$\sum_{j=1}^{n} a_{ij} x_i \geq q_j, \quad \forall\ 1 \leq j \leq m$$

$$x \in N, \forall\ 1 \leq i \leq n \qquad (15)$$

where,

$a_{ij}$ represents a number of times order 'j' appears in pattern 'i', and
$q_j$ represents a number of pieces required in order 'j' and $j = \{1,2,3, ......., m\}$.

At 504, the received third set of input parameters may be transformed to a second set of input parameters associated with the multi-dimensional knapsack problem. The system 102 may be configured to formulate the cutting stock problem as the multi-dimensional knapsack problem by transforming the received third set of input parameters into the second set of input parameters. By way of example, and not limitation, the transformation may be based on a method described in, Gilmore et al, "A linear programming approach to the cutting stock problem-Part II." Operations research 11.6 (1963)".

At 506, a second mathematical formulation of the multi-dimensional knapsack problem may be determined. The second formulation may be determined based on the transformation of the received third set of input parameters to the second set of input parameters. The second mathematical formulation may represent the cutting stock problem as a multi-dimensional knapsack problem. In order to solve the multi-dimensional knapsack problem, the second set of input parameters may have to be further transformed into the first set of input parameters associated with the modified multi-dimensional knapsack problem (with a penalty parameter). Operations at 508 and 510 describe the transformation of the second set of input parameters into the first set of input parameters.

At 508, a third solution of the determined second mathematical formulation may be determined. The third solution may be determined by solving the determined second mathematical formulation on the LP solver 214. In one or more embodiments, the processor 202 may be configured to determine the third solution of the determined second mathematical formulation. The third solution may be used to model the cutting stock problem as the modified multi-dimensional knapsack problem with a penalty vector.

At 510, at least one parameter of the first set of input parameters associated with the modified multi-dimensional knapsack problem may be obtained based on the determined third solution. Details about obtaining at least one parameter of the first set of input parameters are provided in FIG. 4, for example.

Once the transformation at 510 is done, operations from 302 to 314 may be executed to obtain the integral solution of the modified multi-dimensional knapsack problem. The integral solution of the modified multi-dimensional knapsack problem may also be considered as an optimal or near-optimal solution of the cutting stock problem. The system 102 may control the user device 104 to output the determined integral solution of the cutting stock problem.

Control may pass to end. Although the flowchart 500 is illustrated as discrete operations, such as 502, 504, 506, 508, and 510; however, in certain embodiments, such discrete operations may be further divided into additional operations, combined into fewer operations, or eliminated, depending on the particular implementation.

Various embodiments of the disclosure may provide a non-transitory computer-readable storage medium configured to store instructions that, in response to being executed, causes a system (such as the system 102) to perform operations that may include obtaining a first set of input parameters associated with a modified multi-dimensional knapsack problem. The operations may further include determining a lattice representation of the modified multi-dimensional knapsack problem based on the obtained first set of input parameters. The determined lattice representation may include a set of basis vectors. The operations may further include computing a reduced basis by applying a lattice reduction method on the set of basis vectors of the determined lattice representation. The operations may further include determining a first mathematical formulation of the modified multi-dimensional knapsack problem based on the reduced basis. The determined first mathematical formulation may include an objective function and a constraint function applicable on the objective function. The operations may further include submitting the determined first mathematical formulation as an input to an integer linear programming (ILP) solver (such as the ILP solver 108). The operations may further include receiving a first solution of the submitted mathematical formulation from the ILP solver. The operations may further include determining an integral solution of the modified multi-dimensional knapsack problem based on the received solution and controlling a user device to output the determined integral solution.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc."

is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

**Claims**

1. A method, comprising:

    obtaining a first set of input parameters associated with a modified multi-dimensional knapsack problem;
    determining a lattice representation of the modified multi-dimensional knapsack problem based on the obtained first set of input parameters, the determined lattice representation comprising a set of basis vectors;
    computing a reduced basis by applying a lattice reduction method on the set of basis vectors of the determined lattice representation;
    determining a first mathematical formulation of the modified multi-dimensional knapsack problem based on the reduced basis,
    the determined first mathematical formulation comprising an objective function and a constraint function applicable on the objective function;
    submitting the determined first mathematical formulation as an input to an integer linear programming (ILP) solver;
    receiving a first solution of the submitted first mathematical formulation from the ILP solver;
    determining an integral solution of the modified multi-dimensional knapsack problem based on the received first solution; and
    controlling a user device to output the determined integral solution.

2. The method according to claim 1, wherein the first set of input parameters comprises:

    a first parameter representing a cost vector comprising a cost of each offering type of a set of offering types,
    a second parameter representing resources required to fulfil an unknown integral quantity of each offering type of the set of offering types,
    a third parameter representing a set target applicable on the fulfilment of an objective of the modified multi-dimensional knapsack problem, and
    a fourth parameter representing a penalty vector.

3. The method according to claim 2, wherein the penalty vector regularizes the objective function of the modified multi-dimensional knapsack problem based on whether the first solution of the submitted first mathematical formulation violates the set target represented by the third parameter.

4. The method according to claim 1, further comprising:

    receiving a second set of input parameters associated with a multi-dimensional knapsack problem; and
    transforming the received second set of input parameters to the first set of input parameters associated with the modified multi-dimensional knapsack problem,
    wherein the transformation models the multi-dimensional knapsack problem as the modified multi-dimensional knapsack problem.

5. The method according to claim 4, wherein the transforming comprises:

    determining a second mathematical formulation of the multi-dimensional knapsack problem based on the received second set of input parameters;

determining a second solution of the determined second mathematical formulation by solving the second mathematical formulation on a linear programming (LP) solver; and
obtaining at least a first parameter of the first set of input parameters based on the determined second solution.

6. The method according to claim 4, wherein the integral solution of the modified multi-dimensional knapsack problem is also a solution of the multi-dimensional knapsack problem.

7. The method according to claim 1, further comprising:

computing an optimality gap based on the integral solution; and
controlling the user device to output the computed optimality gap as a proof of optimality of the integral solution.

8. The method according to claim 1, further comprising:

computing a product of the reduced basis and the received first solution of the submitted first mathematical formulation; and
determining the integral solution based on a set of integral coordinate values of the computed product.

9. The method according to claim 1, further comprising:

receiving a third set of input parameters associated with a cutting stock problem;
transforming the received third set of input parameters to a second set of input parameters associated with a multi-dimensional knapsack problem;
determining a second mathematical formulation of the multi-dimensional knapsack problem based on the transformation;
determining a third solution of the determined second mathematical formulation by solving the determined second mathematical formulation on a linear programming (LP) solver; and
obtaining at least a first parameter of the first set of input parameters associated with the modified multi-dimensional knapsack problem, based on the determined third solution.

10. The method according to claim 9, wherein the integral solution of the modified multi-dimensional knapsack problem is also a solution of the cutting stock problem.

11. The method according to claim 1, wherein the modified multi-dimensional knapsack problem is a project return maximization problem subjected to one or more budget constraints.

12. A non-transitory computer-readable storage medium configured to store instructions that, in response to being executed, causes a system to perform operations, the operations comprising:

obtaining a first set of input parameters associated with a modified multi-dimensional knapsack problem;
determining a lattice representation of the modified multi-dimensional knapsack problem based on the obtained first set of input parameters, the determined lattice representation comprising a set of basis vectors;
computing a reduced basis by applying a lattice reduction method on the set of basis vectors of the determined lattice representation;
determining a first mathematical formulation of the modified multi-dimensional knapsack problem based on the reduced basis,
the determined first mathematical formulation comprising an objective function and a constraint function applicable on the objective function;
submitting the determined first mathematical formulation as an input to an integer linear programming (ILP) solver;
receiving a first solution of the submitted first mathematical formulation from the ILP solver;
determining an integral solution of the modified multi-dimensional knapsack problem based on the received first solution; and
controlling a user device to output the determined integral solution.

13. The non-transitory computer-readable storage medium according to claim 12, wherein the first set of input parameters comprises:

a first parameter representing a cost vector comprising a cost of each offering type of a set of offering types, a second parameter representing resources required to fulfil an unknown integral quantity of each offering type of the set of offering types,
a third parameter representing a set target applicable on the fulfilment of an objective of the modified multi-dimensional knapsack problem, and
a fourth parameter representing a penalty vector.

14. The non-transitory computer-readable storage medium according to claim 13, wherein the penalty vector regularizes the objective function of the modified multi-dimensional knapsack problem based on whether the first solution of the submitted first mathematical formulation violates the set target represented by the third parameter.

15. The non-transitory computer-readable storage medium according to claim 12, wherein the operations further comprise:

receiving a second set of input parameters associated with a multi-dimensional knapsack problem; and
transforming the received second set of input parameters to the first set of input parameters associated with the modified multi-dimensional knapsack problem,
wherein the transformation models the multi-dimensional knapsack problem as the modified multi-dimensional knapsack problem.

16. The non-transitory computer-readable storage medium according to claim 15, wherein the operations further comprise:

determining a second mathematical formulation of the multi-dimensional knapsack problem based on the received second set of input parameters;
determining a second solution of the determined second mathematical formulation by solving the second mathematical formulation on a linear programming (LP) solver; and
obtaining at least a first parameter of the first set of input parameters based on the determined second solution.

17. The non-transitory computer-readable storage medium according to claim 15, wherein the integral solution of the modified multi-dimensional knapsack problem is also a solution of the multi-dimensional knapsack problem.

18. The non-transitory computer-readable storage medium according to claim 12, wherein the operations further comprise:

computing an optimality gap based on the integral solution; and
controlling the user device to output the computed optimality gap as a proof of optimality of the integral solution.

19. The non-transitory computer-readable storage medium according to claim 12, wherein the operations further comprise:

computing a product of the reduced basis and the received first solution of the submitted first mathematical formulation; and
determining the integral solution based on a set of integral coordinate values in the computed product.

20. A system, comprising:
a processor configured to:

obtain a first set of input parameters associated with a modified multi-dimensional knapsack problem;
determine a lattice representation of the modified multi-dimensional knapsack problem based on the obtained first set of input parameters, the determined lattice representation comprising a set of basis vectors;
compute a reduced basis by applying a lattice reduction method on the set of basis vectors of the determined lattice representation;
determine a first mathematical formulation of the modified multi-dimensional knapsack problem based on the reduced basis,
the determined first mathematical formulation comprising an objective function and a constraint function applicable on the objective function;
submit the determined first mathematical formulation as an input to an integer linear programming (ILP) solver;

receive a first solution of the submitted first mathematical formulation from the ILP solver;
determine an integral solution of the modified multi-dimensional knapsack problem based on the received first solution; and
control a user device to output the determined integral solution.

**FIG. 1**

EP 4 030 363 A1

200

Linear Programming (LP) Solver 214

Integer Linear Programming (ILP) Solver 108

Communication Network 110

System 102

Network Interface 212

Processor 202

Memory 204

I/O Device 208

Display Device 210

Persistent Data Storage 206

User Device 104

*FIG. 2*

EP 4 030 363 A1

300

(A)

| Data Acquisition 302 | → | Lattice Representation Determination 304 | → | Reduced Basis Computation 306 | → | Mathematical Formulation Determination 308 |

Mathematical Formulation Submission 310

Result Output 316 ← Optimality Gap Computation 314 ← Integral Solution Determination 312

*FIG. 3*

400

402

Receive second set of input parameters associated with multi-dimensional knapsack problem

404

Transform received second set of input parameters to first set of input parameters associated with modified multi-dimensional knapsack problem

406

Determine second mathematical formulation of multi-dimensional knapsack problem based on received second set of input parameters

408

Determine second solution of determined second mathematical formulation by solving second mathematical formulation on linear programming (LP) solver

410

Obtain at least first parameter of first set of input parameters based on determined second solution

A

FIG. 4

500

| | 502 |
|---|---|
| Receive third set of input parameters associated with cutting stock problem | |

↓

| | 504 |
|---|---|
| Transforming received third set of input parameters to second set of parameters associated with multi-dimensional knapsack problem | |

↓

| | 506 |
|---|---|
| Determine second mathematical formulation of multi-dimensional knapsack problem based on transformation | |

↓

| | 508 |
|---|---|
| Determine third solution of determined second mathematical formulation by solving determined second mathematical formulation on linear programming (LP) solver | |

↓

| | 510 |
|---|---|
| Obtain at least first parameter of first set of input parameters associated with modified multi-dimensional knapsack problem based on determined third solution | |

↓

( A )

**FIG. 5**

Europäisches
Patentamt

European
Patent Office

Office européen
des brevets

**EUROPEAN SEARCH REPORT**

Application Number

EP 21 21 1644

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 691 499 B1 (YANG SHUANGHONG [CN] ET AL) 23 June 2020 (2020-06-23) <br> * column 3 - column 34 * <br> ----- | 1-20 | INV. G06Q10/04 |
| X | US 2006/112049 A1 (MEHROTRA SANJAY [US] ET AL) 25 May 2006 (2006-05-25) <br> * paragraph [0053] - paragraph [0156] * <br> * paragraph [0160] * <br> ----- | 1-20 | |
| X | MOKAMMEL HAQUE MD ET AL: "Optimizing preprocessing method of recursive-BKZ lattice reduction algorithm", <br> 2015 2ND INTERNATIONAL CONFERENCE ON ELECTRICAL INFORMATION AND COMMUNICATION TECHNOLOGIES (EICT), IEEE, <br> 10 December 2015 (2015-12-10), pages 19-23, XP032856336, <br> DOI: 10.1109/EICT.2015.7391915 <br> ISBN: 978-1-4673-9256-3 <br> [retrieved on 2016-01-25] <br> * page 19 - page 22 * <br> ----- | 1-20 | |
| X | PHONG Q NGUYEN ET AL: "Lattice reduction in cryptoglogy: An update", <br> ELECTRONIC PUBLISHING, ARTISTIC IMAGING, AND DIGITAL TYPOGRAPHY; [LECTURE NOTES IN COMPUTER SCIENCE , ISSN 0302-9743], <br> SPRINGER VERLAG, DE, <br> vol. 1838, 3 July 2000 (2000-07-03), pages 1-29, XP002421157, <br> ISBN: 978-3-540-24128-7 <br> * page 1 - page 22 * <br> ----- <br> -/-- | 1-20 | TECHNICAL FIELDS SEARCHED (IPC) <br><br> G06Q |

The present search report has been drawn up for all claims

| Place of search | Date of completion of the search | Examiner |
|---|---|---|
| Munich | 11 April 2022 | Lavin Liermo, Jesus |

EPO FORM 1503 03.82 (P04C01)

## EUROPEAN SEARCH REPORT

Application Number

EP 21 21 1644

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PLANTARD THOMAS ET AL: "Lattice Reduction for Modular Knapsack", 31 December 2013 (2013-12-31), COMPUTER VISION – ECCV 2020 : 16TH EUROPEAN CONFERENCE, GLASGOW, UK, AUGUST 23-28, 2020 : PROCEEDINGS; [LECTURE NOTES IN COMPUTER SCIENCE ; ISSN 0302-9743], PAGE(S) 275 – 286, XP047608377, ISBN: 978-3-030-58594-5 * page 275 – page 283 * ----- | 1-20 | |

TECHNICAL FIELDS SEARCHED (IPC)

The present search report has been drawn up for all claims

| Place of search | Date of completion of the search | Examiner |
|---|---|---|
| Munich | 11 April 2022 | Lavin Liermo, Jesus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 21 21 1644

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2022

| Patent document cited in search report | | Publication date | Patent family member(s) | | Publication date |
|---|---|---|---|---|---|
| US 10691499 | B1 | 23-06-2020 | AU 2019253789 | B1 | 08-10-2020 |
| | | | CA 3059603 | A1 | 24-10-2020 |
| | | | CN 112136109 | A | 25-12-2020 |
| | | | EP 3746960 | A1 | 09-12-2020 |
| | | | JP 2021517673 | A | 26-07-2021 |
| | | | KR 20200125894 | A | 05-11-2020 |
| | | | SG 11201910147U | A | 27-11-2020 |
| | | | US 10691499 | B1 | 23-06-2020 |
| | | | US 2020341817 | A1 | 29-10-2020 |
| | | | WO 2020219042 | A1 | 29-10-2020 |
| US 2006112049 | A1 | 25-05-2006 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GILMORE et al.** A linear programming approach to the cutting stock problem-Part II. *Operations research,* 1963, vol. 11 (6